# EUROPÄISCHE PATENTSCHRIFT

(11) **EP 2 215 371 B1**
(45) Veröffentlichungstag und Bekanntmachung des Hinweises auf die Patenterteilung: **02.05.2012**
(21) Anmeldenummer: 08843226.5
(22) Anmeldetag: 24.10.2008
(51) Int. Cl.: F16B 13/14

(54) **TELESKOPDÜBEL I**
TELESCOPIC DOWEL I
CHEVILLE TÉLESCOPIQUE I

(30) Priorität: 26.10.2007 DE 102007051626
(43) Veröffentlichungstag der Anmeldung: 11.08.2010
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2008/001728
(87) Internationale Veröffentlichungsnummer: WO 2009/052801

(56) Entgegenhaltungen:
- DE-U1-202005 005 579

## Beschreibung

Die Erfindung betrifft einen Klebedübel zur Verwendung in Leichtbauplatten, der aus mindestens einem Zylinderkörper und mindestens einem Kolbenkörper besteht.

Die Leichtbauplatten, oft auch als Sandwichplatten oder Wabenplatten bezeichnet, haben im Möbelbau in der Regel formsteife Decklagen aus Dünnspanplatten, mittel- oder hochdichten Faserplatten, Sperrholz- oder Hartfaserplatten. Die Sandwichplatten haben dabei als Mittelschicht bzw. Stützkern z.B. PolyurethanSchaum oder Polystyrol. Bei den Wabenplatten werden als Zwischenlagen oft Wellstegeinlagen oder sog. expandierte Honigwaben eingesetzt. Die meisten Leichtbauplatten haben eine Rohdichte, die unter 500 kg/m³ liegt. Werden für die Zwischenlage keine brandhemmenden Aluminiumschäume oder Blähglas verwendet, liegt die Rohdichte unter 350 kg/m³. Zum Vergleich beträgt die Rohdichte einer unbeschichteten Spanplatte ca. 600 bis 750 kg/m³.

Sollen an Leichtbauplatten Beschläge, z.B. durch Anschrauben, befestigt werden, hat man das Problem, dass die Befestigungsmittel in der Regel nur an der relativ dünnen oberen Decklage bzw. Deckplatte Halt finden.

Dazu wird in der nicht vorveröffentlichten DE 10 2006 049 953 A1 ein mindestens zweiteiliger Dübel beschrieben, bei dem mindestens zwei größere Dübelbauteile während der Dübelmontage ineinander geschoben werden. Ein zumindest bereichsweise topfförmiges Bauteil hat hierbei die Funktion eines Zylinders, während ein zapfenartiges Bauteil die Funktion eines Kolbens übernimmt. Im Boden des topfförmigen Bauteils liegt eine Klebstoffpatrone, deren ballonartige Hülle beim Zusammenschieben der beiden genannten Dübelbauteile aufplatzt. Der Klebstoff ergießt sich somit im Bereich der unteren Deckplatte der Leichtbauplatte.

Ferner zeigt die DE 20 2005 005 579 U1 einen Klebedübel. Dieser Dübel besteht aus einer Außenhülse und einem Innenteil. Die Außenhülse steckt lose mit Spiel auf dem Innenteil, wobei sich zwischen beiden ein Ringspalt befindet. Zwischen das Innenteil und die Außenhülse wird Klebstoff von außen über einen zentralen Klebstoffzuführkanal des Innenteils eingespritzt, um die Leichtbauplatte und die Dübelteile miteinander zu verkleben .

Der vorliegenden Erfindung liegt das Problem zugrunde, einen Klebedübel für Leichtbauplatten zu entwickeln, der bei einfacher Montage fest, sicher und dauerhaft in der Leichtbauplatte hält.

Das Problem wird mit den Merkmalen des Anspruchs 1 gelöst. Der einzelne Zylinderkörper umschließt zusammen mit mindestens einem Kolbenkörper einen Zylinderinnenraum dicht. Der Zylinderinnenraum ist mit einem fließfähigen Klebstoff befüllt. Der Zylinderkörper hat an seinem vorderen und/oder seinem hinteren Endbereich mindestens eine Klebstoffaustrittsöffnung, die durch ein druckgesteuertes Ventil öffenbar ist.

Mit der Erfindung wird ein sog. hydraulischer Klebedübel vorgestellt, der im Prinzip wie eine Zylinder-Kolben-Einheit aufgebaut ist. Im Handelszustand ist der Zylinder mit fließfähigem Klebstoff befüllt. Der Kolben dichtet den Zylinder ab. Wird nun die dübelartige Zylinder-Kolben-Einheit in eine Bohrung einer Leichtbauplatte gesteckt und dort der Kolben in den Zylinder oder auch umgekehrt der Zylinder über den Kolben geschoben, öffnet sich mindestens ein Ventil. Letzteres kann eine Berstscheibe, ein reguläres Ventil oder dergleichen sein. Nach dem Öffnen des Ventils strömt der Klebstoff unter Druck aus dem Zylinder aus. Hierbei kann der noch fließfähige Klebstoff über Bohrungen oder Kanäle dorthin geleitet werden, wo er zum Halten des Dübels in der Leichtbauplatte benötigt wird. Nach dem teleskopartigen Zusammenschieben der sog. Zylinder-Kolben-Einheit härtet der Klebstoff aus.

In die z.B. aus zäh elastischem Kunststoff gefertigte Einheit kann dann, auch schon während des Aushärtens, eine Schraube eingedreht werden.

Um zum Beispiel auch Plattendickenschwankungen ausgleichen zu können, benötigen diese patronenartigen Klebedübel keine Verrastung zwischen den beiden Hauptbauteilen. Wenn das Klebstoffreservoir des einzelnen Klebedübeltyps groß genug ist, kann dieser Typ auch für Leichtbauplatten unterschiedlicher Wandstärke eingesetzt werden. Bei dickeren Platten wird dann der Kolben einfach weniger weit in den Zylinder geschoben.

Weitere Einzelheiten der Erfindung ergeben sich aus den Unteransprüchen und den nachfolgenden Beschreibungen schematisch dargestellter Ausführungsformen.
- Figur 1:: Perspektivische Darstellung des Dübels von schräg oben;
- Figur 2:: wie Figur 1, jedoch von schräg unten;
- Figur 3:: Schnitt durch eine Leichtbauplatte mit ein- gestecktem Dübel;
- Figur 4:: wie Figur 3, jedoch mit montiertem Dübel und Möbelbeschlag;
- Figur 5:: wie Figur 3, jedoch mit einem Dübel mit spreizbarem Zylinderkörper ;
- Figur 6:: wie Figur 5, jedoch mit montiertem Dübel;
- Figur 7:: Schnitt durch einen eingesteckten Dübel mit einem Flansch am Zylinderkörper;
- Figur 8:: wie Figur 7, jedoch mit montiertem Dübel;
- Figur 9:: Schnitt durch einen montierten Dübel in einer Leichtbauplatte mit dickerem Stützkern;
- Figur 10:: Schnitt durch einen eingesteckten Dübel mit zwei Kolbenkörpern;
- Figur 11:: wie Figur 10, jedoch mit eingeschobenem unteren Kolbenkörper;
- Figur 12:: wie Figur 11, jedoch mit zusätzlich eingeschobenem oberen Kolbenkörper;
- Figur 13:: wie Figur 3, jedoch mit verkürzten Kanälen und umgepumptem Klebstoff;
- Figur 14:: Querschnitt des Kolbenkörpers aus Figur 5 in Höhe der Rastnocken.

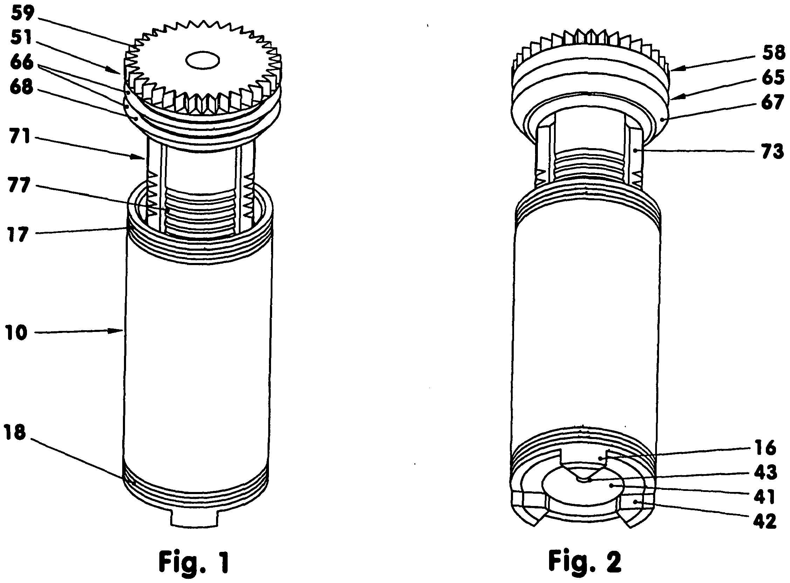

Die Figuren 1 und 2 zeigen einen Klebedübel in zwei Ansichten. Der Klebedübel ist im Auslieferungszustand dargestellt. Dazu steckt im Zylinderkörper (10) des Klebedübels ein teilsweise die Ausnehmung (31) des Zylinderkörpers (10) eingeschobener Kolbenkörper (50). Zwischen dem Kolbenkörper (50) und dem Zylinderkörper (10) ist ein fließfähiger Klebstoff (8) eingeschlossen. Letzterer ist beispielsweise ein auf PolyurethanBasis hergestellter feuchtigkeitsvernetzender Leim, der bei Zimmertemperatur eine Dichte von 4000 bis 8000 mPa·s hat. Der Klebstoffe arbeitet z.B. ohne Volumenzunahme.

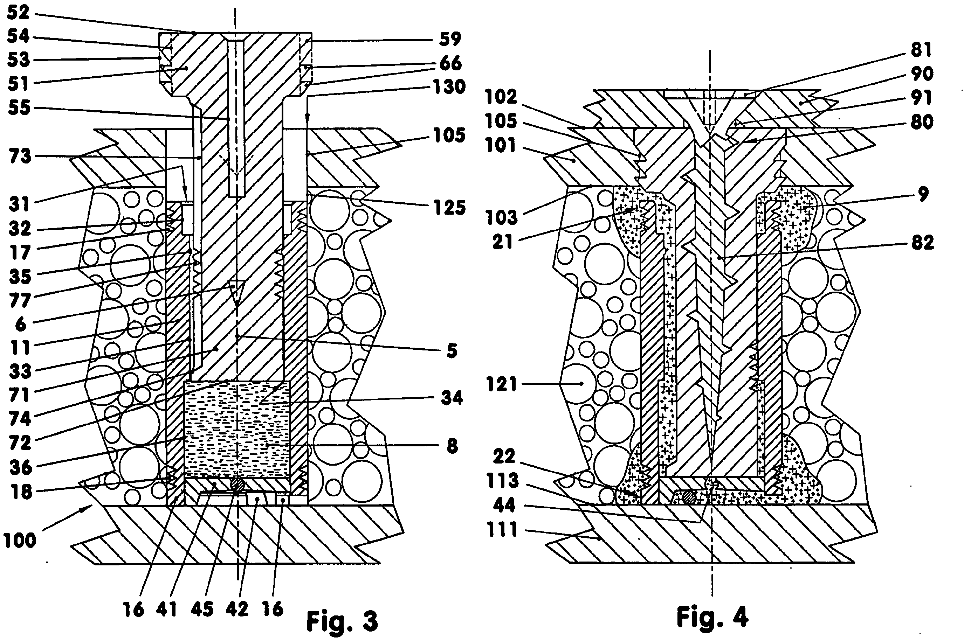

Die Figur 3 zeigt den Klebedübel nach den Figuren 1 und 2 im Längsschnitt. Sein Zylinderkörper (10) steckt dabei in einer Leichtbauplatte (100) ohne Riegel und feste Einlagen, vgl. auch Figur 4, an der mit Hilfe des Klebedübels z.B. ein Möbelbeschlag (90) befestigt werden soll.

Die gezeigte Leichtbauplatte (100) umfasst zwei Deckplatten (101) und (111) und einen dazwischen liegenden Stützkern (121). Jede Deckplatte (101, 111) besteht im Ausführungsbeispiel aus einer Dünnspanplatte. Der Stützkern (121) ist hier z.B. ein PU-Schaumkern. Die Deckplatten (101, 111) sind mit ihren innen liegenden Oberflächen (103, 113) mit dem plattenförmigen Stützkern (121) verklebt. Die dargestellte Leichtbauplatte hat eine Wandstärke von 20 bis 40 Millimetern. Jede Deckplatte ist z.B. 2 bis 8 Millimeter dick. Statt des Schaumkerns kann sie u.a. auch einen Wabenkern haben. In der Leichtbauplatte (100) befindet sich eine Bohrung (130), die sich aus den Abschnitten (105) und (125) zusammensetzt.

Die Leichtbauplatte (100) kann auch gewölbt, z.B. zylindrisch oder sphärisch, ausgeführt sein, sofern die Materialstärke des Stützkerns (121) zumindest annähernd konstant ist.

Um den Klebedübel montieren zu können, wird die erste Deckplatte (101) und der Stützkörper (121) auf- bzw. durchbohrt. Als Bohrwerkzeug wird beispielsweise ein Spiralbohrer benutzt, der einen Spitzenwinkel von 180 Winkelgraden aufweist. Ggf. kann auch ein Stirnsenker verwendet werden. Je nach Dübelbauart kann die Bohrung (130) auch mit einem Stufensenker gebohrt werden. Die entstandene Ausnehmung, bzw. Bohrung (130), wird beispielsweise mit Pressluft freigeblasen oder leergesaugt.

Der Zylinderkörper (10) ist ein topfförmiges Bauteil, das aus seinem Rohrabschnitt (11) und einem Boden (41) besteht. Im Ausführungsbeispiel ist der Boden (41) im Rohrabschnitt (11) verklemmt, verklebt oder verschweißt. Der Boden (41) kann jedoch auch am Rohrabschnitt (11) angeformt sein.

Der Rohrabschnitt (11) hat an seinem unteren Ende im Ausführungsbeispiel z.B. drei Füße (16), mit denen er auf der innen liegenden Oberfläche (113) der unteren Deckplatte (111) aufsteht. Die Außenwandung des Rohrabschnitts (11) ist z.B. weitgehend zylindrisch. Am oberen und unteren Ende ist die Außenwandung ggf. strukturiert. Nach den Figuren 3 und 4 befinden sich dort jeweils drei umlaufende Kerben (17, 18). Die einzelnen Kerben (17, 18) haben in der Gruppe zueinander den jeweils gleichen Abstand. Sie haben z.B. eine Tiefe von 0,3 bis 0,8 Millimetern.

Die Innenwandung des Rohrabschnittes (11) ist in drei zylindrische Bereiche, einen oberen Verteilbereich (32), einen mittigen Zylinderbereich (33) und einen unteren Verdrängungsbereich (36) aufgeteilt. Der Verteilbereich (32) und der Verdrängungsbereich (36) haben hier jeweils den gleichen Durchmesser. Dieser ist um ca. einen Millimeter größer als der Innendurchmesser des Zylinderbereichs (33). Im oberen Bereich des Zylinderbereichs (33) sind z.B. sechs auf dem Innenumfang in einer Ebene gelegene Rastnoppen (35), linsenförmige, nach innen ragende Erhöhungen, gleichmäßig verteilt angeordnet.

Der zum Verdrängungsbereich (36) hin ebene Boden (41) hat z.B. ebenfalls drei Füße (42), die sich an der innen liegenden Oberfläche (113) abstützen. Sie liegen in radialer Richtung vor den Füßen (16) des Rohrabschnitts (11). Der Boden (41) hat hier eine z.B. zentrale Austrittsausnehmung (43), in der als Verschlusselement (45) eine Kugel dicht eingestemmt ist.

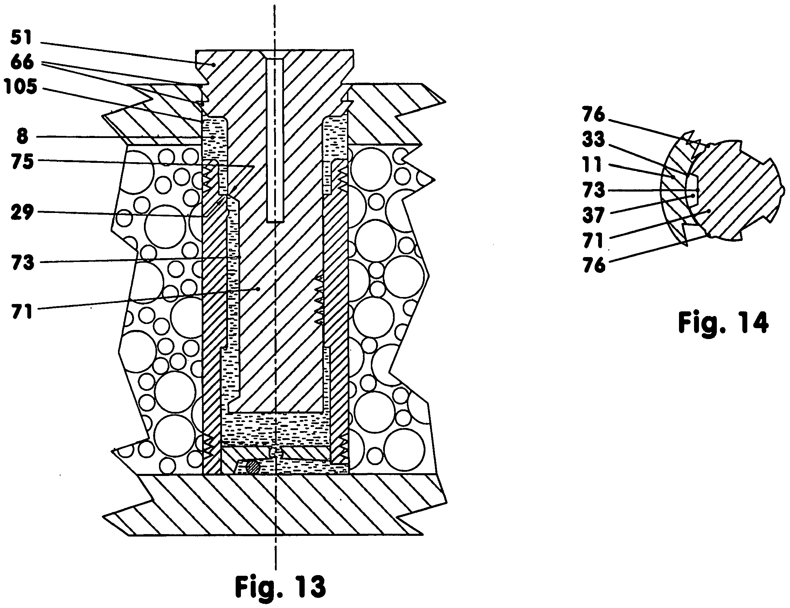

Der Kolbenkörper (50) besteht aus einem Kolbenabschnitt (71) und einem Klemmabschnitt (51). Der Kolbenabschnitt (71) ist hier großteils zylindrisch gestaltet. Er hat einen Außendurchmesser, der dem Innendurchmesser des Zylinderbereichs (33) des Zylinderkörpers (10) entspricht. Im Bereich seiner unteren Stirnseite, der Kolbenbodenfläche (72), liegt er dicht am Zylinderbereich (33) an. An der Außenwandung des Kolbenabschnitts (71) befinden sich z.B. drei am Umfang äquidistant verteilte Kanäle (73), vgl. Querschnitt (37) in Figur 14, zur Führung des fließfähigen Klebstoffs (8). Der einzelne Kanal (73) ist ca. 0,5 mm tief und im Mittel 1,85 mm breit. Die z.B. parallel zur Mittellinie (5) verlaufenden Kanäle (73) enden unten z.B. 0,5 ... 1 mm vor der Kolbenbodenfläche (72), während sie oben z.B. bis an den Klemmabschnitt (51) heranreichen.

Ggf. können die Kanäle (73) auch in die Wandung des Zylinderbereichs (33) eingearbeitet sein. Ebenso können die Kanäle auch als Bohrungen in den Bauteilen (10) oder (50) angeordnet sein.

Im mittleren Bereich befindet sich in der Außenwandung des Kolbenabschnitts (71) eine Struktur, die u.a. das Haften des Klebstoffs (9) am Kolbenabschnitt (71) verbessern soll. Hier sind es z.B. vier kerbenartige Querrillen (77), vgl. auch Figuren 1 und 2.

Der Klemmabschnitt (51), der beispielsweise als Hüllfläche (53) die Form eines Zylinders hat, ist in zwei Zonen unterschiedlicher Strukturen (58, 65) aufgeteilt. Als Hüllfläche (53) wird hier eine Mantelfläche bezeichnet, auf der speziell die Punkte der Strukturen (58, 65) liegen, die von der Mittellinie (5) einen jeweils gleichlangen, maximalen Abstand haben. Der Durchmesser dieser Hüllfläche (53) ist größer als der Innendurchmesser der Bohrung (130) der Leichtbauplatte (100), in die der Klebedübel eingesetzt wird.

Die erste Zone des Klemmabschnitts (51) hat als Struktur (58) eine Längsrillung. Diese Längsrillung (58) ist eine Art Kerbverzahnung mit geraden, z.B. spitz zulaufenden Zähnen (59). Im Ausführungsbeispiel beträgt die Zahnbreite ca. 1 Millimeter. Die Zahnfußbreite misst ca. 0,7 Millimeter. In Figur 1 hat die Längsrillung (58) 36 Zähne. Die Profilwinkel der linken und rechten Zahnflanken sind gleich groß. Je nach Ausführungsform schwankt die Zähnezahl zwischen 15 und 50 Zähnen. Die Kerbverzahnung hat eine konstante Teilung.

Alternativ kann die Struktur (58) auch eine Aneinanderreihung von z.B. halbkugelförmigen Noppen sein.

Die zweite Zone des Klemmabschnitts (51) hat als Struktur (65) eine Querrillung. Die Querrillung (65) besteht z.B. aus zwei bis vier umlaufenden Stegen (66). Beispielsweise haben alle Stege (66) den gleichen Querschnitt und die gleiche Querschnittsform. Auch sind die Stege (66) jeweils gleich weit voneinander entfernt.

Jeder Steg (66) hat eine Gleit- (67) und eine Sperrflanke (68). Die Gleitflanke (67) hat die Gestalt eines geraden Kegelstumpfmantels, dessen gedachte Spitze auf der Mittellinie (5) - nach Figur 3 - unterhalb des Klemmabschnitts (51) liegt. Der Kegelwinkel des Kegelstumpfmantels beträgt hier 80 Winkelgrade.

An der Rückseite der Gleitflanke (67) schließt sich die z.B. ebene Sperrflanke (68) an. Die Normale der Ebene der Sperrflanke (68) verläuft parallel zur Mittellinie (5). Die gemeinsame Schnittkante von Gleitflanke (67) und Sperrflanke (68) liegt auf der Hüllfläche (53).

Der letzte Steg (66), also der, der sich direkt an die Längsrillung (58) anschließt, geht direkt in diese über. Die Sperrflanke (68) dieses Steges (66) existiert nur in den Zahnlücken der Längsrillung (58).

Im Ausführungsbeispiel ist der Durchmesser der Hüllfläche (53) um 0,5 Millimeter größer als der Innendurchmesser der Bohrung (105), vgl. Figur 3. Wird der Kolbenabschnitt (71) in die Bohrung (130) eingeschoben und der Klemmabschnitt (51) in die Bohrung (105) eingepresst, so verkrallen sich die Stege (66) in den unteren Schichten der Deckplatte (101), während sich die Zähne der Längsrillung (58) in der, in der Regel härteren, Oberflächenschicht der Deckplatte (101) einkerben, vgl. Figur 4. Der Kernzylinder (54), er beschreibt eine Fläche, auf der diejenigen Punkte der Strukturen (58, 65) liegen, deren Abstand zur Mittellinie (5) des Klebedübels minimal sind, hat hier einen kleineren Durchmesser als die Bohrung (105). Trotzdem reicht das hier erzielte Einkerben als Verdrehsicherung.

Die obere Stirnfläche (52) des Klemmabschnitts (51) liegt im Ausführungsbeispiel, vgl. Figur 4, in der Ebene der außen liegenden Deckplattenoberfläche (102). In der Praxis liegt die Stirnfläche (52) meist ein bis zwei Zehntel Millimeter unterhalb der oben genannten Ebene.

Der Klemmabschnitt (51) hat hier als zentrale Ausnehmung (55) eine zylindrische Bohrung, die am Übergang zur z.B. planen Stirnfläche (52) eine 45°-Fase, z.B. 0,5 x 45°, aufweist. Die Bohrung (55), in die später ein Befestigungsmittel (80), vgl. Figur 4, eingeschraubt wird, hat z.B. einen Durchmesser von 1,3 Millimetern. Im Ausführungsbeispiel dient sie u.a. der Führung des Befestigungsmittels (80), damit dieses beim Einschrauben nicht von der Mittellinie (5) wegwandert. Die Bohrung (55) ist in der Regel kürzer als das einzuschraubende oder einzuschlagende Befestigungsmittel (80), zumindest ist sie in den gezeigten Ausführungsbeispielen keine Durchgangsbohrung.

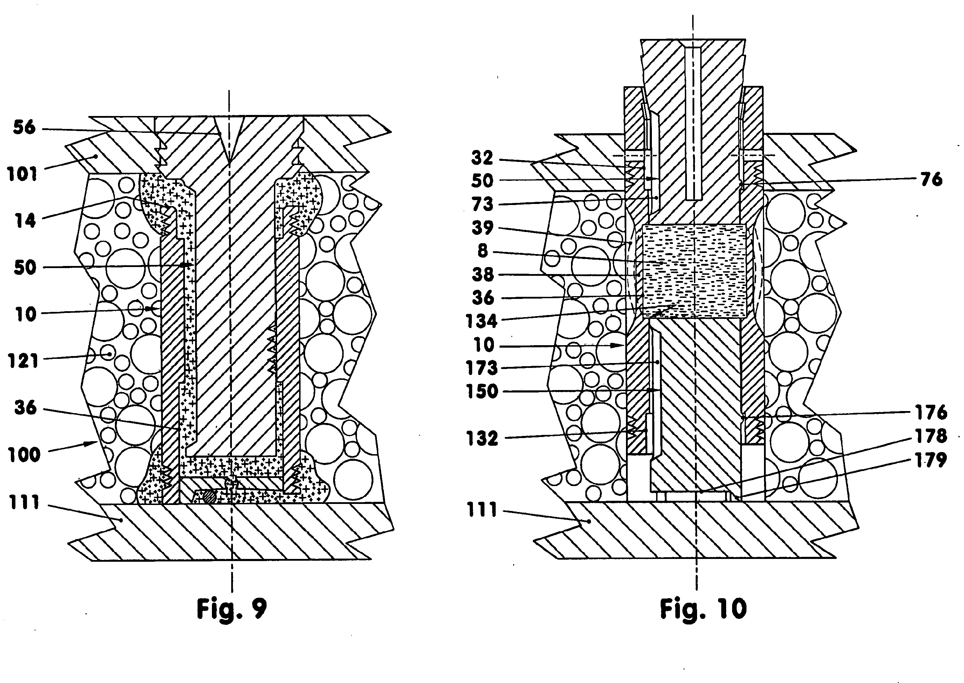

Selbstverständlich kann die Ausnehmung (55) auch nahezu jeden anderen Querschnitt haben, z.B. einen ovalen, einen polygonalen, einen vieleckigen, einen sternförmigen oder dergleichen. Auch kann die Ausnehmung nur die Form eines kurzen, geraden Kegels (56) haben, vgl. Figur 9. In diesem Fall muss sich das Befestigungsmittel (80) den größten Teil der haltenden Bohrung selbst erzeugen.

Auch kann die Ausnehmung (55, 56) weggelassen werden oder nur durch einen Markierungspunkt ersetzt werden.

Zum Befestigen eines Möbelbeschlags (90) werden die erforderlichen Klebedübel in die Bohrungen (130) der Leichtbauplatte (100) in der Regel in einem Hub eingedrückt, der entsprechende Möbelbeschlag (90) positioniert und mittels Schrauben (80) im Klebedübel befestigt.

Im Einzelnen wird zunächst der Klebedübel in die Bohrung (130) so eingesetzt, dass der Zylinderkörper (10) auf der innen liegenden Oberfläche (113) aufliegt. Die obere Stirnfläche (14) des Zylinderkörpers (10) liegt hierbei z.B. 0,5 mm unterhalb der innen liegenden Oberfläche (103) der oberen Deckplatte (101). Beim weiteren Eindrücken des Kolbenkörpers (50) entsteht im Zylinderbereich (33) ein Überdruck, so dass das Verschlusselement (45) des Bodens (41) aus der Austrittsausnehmung (43) herausspringt. Der Klebstoff (8) strömt über die Ausnehmung (43) nach unten aus und beginnt sich unterhalb des Bodens (41) zu verteilen. Nahezu gleichzeitig rasten die Rastnoppen (35) aus der oberen Querrille (77) heraus. Der Kolbenkörper (50) wandert weiter nach unten. Sobald die einzelnen Kanalenden (74) die untere Steuerkante (34) des Zylinderbereichs (33) passiert haben, strömt Klebstoff (8) durch die Kanäle (73) nach oben. Dies geschieht zwangsläufig, da der freie Querschnitt (44) der Austrittsausnehmung (43) wesentlich kleiner ist als die Summe der Querschnitte (37) der Kanäle (73), vgl. Figur 14. Die Austrittsausnehmung (43) wirkt hydraulisch als Drossel.

Der nach oben verdrängte Klebstoff (8) sammelt sich im Verteilbereich (32) und in der Bohrung (105). Der nun in die Bohrung (105) geschobene Klemmabschnitt (51) verpresst den im Bereich der Bohrung (105) vorhandenen Klebstoff (8) unterhalb der Oberfläche (103). In den darauf folgenden Minuten härtet der Klebstoff (8) aus, vgl. Figur 4.

Schon während des Abbindens des Klebstoffs (8, 9) kann der Möbelbeschlag (90) über den Klebedübel positioniert werden, um dann, z.B. mittels Spanplattenschrauben (80), in den jeweiligen Ausnehmungen (55) oder (56) fixiert zu werden. Ggf. dehnt die einzelne Spanplattenschraube (80) den Klebedübel zusätzlich auf, so dass sich der Klemmabschnitt (51) noch weiter in der Bohrung (105) verkrallt. Hierbei kann sogar ein mechanischer Umgriff an der innen liegenden Oberfläche (103) der Deckplatte (101) entstehen.

In Figur 13 ist ein vergleichbarer Klebedübel dargestellt. Allerdings hat sein Kolbenkörper (50) kürzere Kanäle (73). Das obere Ende (75) der Kanäle (73) ist so gewählt, dass die Kanalenden (75) die obere Steuerkante (29) des Zylinderbereichs (33) gerade passieren, wenn zumindest ein Teil der Stege (66) des Klemmabschnitts (51) sich schon dichtend in der Bohrung (105) befinden. Die obere Steuerkante (29) wirkt wie die Steuerkante eines hydraulischen Ventils. Der Spalt zwischen ihr und der zylindrischen Wandung des Kolbenabschnitts (71) verhindert ein Zurückströmen des noch flüssigen Klebstoffs (8). Die zwischen dem Klemmabschnitt (51) und der Bohrung (105) eingeschlossene Klebstoffmenge kann nur im oberen Dübelbereich verpresst werden. Durch die Länge der Kanäle (73) kann so zusätzlich die oben zu verpressende Klebstoffmenge gezielt gesteuert werden.

In Figur 9 wird eine Leichtbauplatte (100) gezeigt, bei der die Wandstärke des Stützkerns (121) einige Millimeter größer ist als z.B. in den vorangegangenen Figuren 3 und 4. Der dargestellte Klebedübel entspricht - bezüglich seiner geometrischen Abmessungen - dem Klebedübel aus den Figuren 3 und 4.

Hier ist dann der lichte Abstand zwischen der oberen Stirnfläche (14) des Zylinderkörpers (10) und der oberen Deckplatte (101) größer als bei den Figuren 3 und 4. In der Folge kann nach dem regulären Eindrücken des Kolbenkörpers (50) der Klebstoff (8) nicht vollständig aus dem Verdrängungsbereich (36) verdrängt werden. Die verbleibende Klebstoffrestmenge fehlt dann vor den Deckplatten (101, 111).

Je nach Klebstoffbedarf kann der gezeigte Klebedübel für verschieden starke Leichtbauplatten verwendet werden.

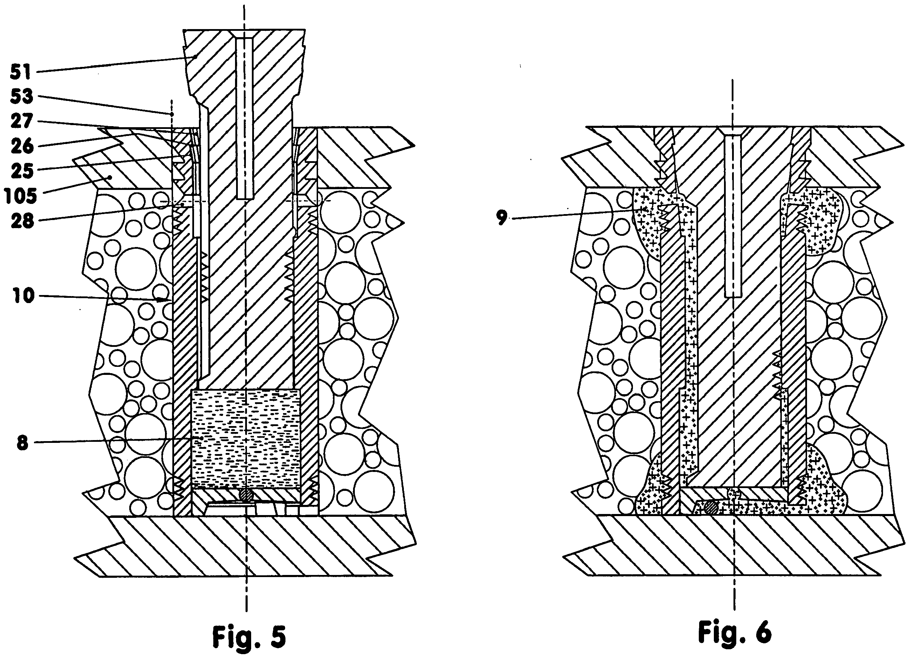

Die Figuren 5 und 6 zeigen einen Klebedübel mit einem nach oben verlängerten Zylinderkörper (10), der eine Länge hat, die der Summe aus der Zwischenlagendicke und der Wandstärke der oberen Deckplatte (101) entspricht. Ggf. kann diese Länge auch geringfügig kleiner sein als die Summe. Bei dieser Variante trägt der obere Bereich des Zylinderkörpers (10) an der Außenwandung die beiden Strukturen (58, 65) des Klemmabschnitts (51) nach den Figuren 1 bis 4. Allerdings ist der Durchmesser der Hüllfläche (53) kleiner/gleich dem Innendurchmesser der Bohrung (105).

In die Innenwandung des oberen Zylinderkörperbereichs ist mindestens eine Rastkerbe (25) eingearbeitet, deren obere Kerbflanke (26) z.B. eine Ebene bildet. Zusätzlich ist die Innenwandung in dem Bereich, in dem bei montiertem Dübel der Klemmabschnitt (51) sitzt, vgl. Figur 6, mit einer Vielzahl von Längsrillen (27) profiliert. Um den Klemmabschnitt (51) nach der Montage verdrehsicher im Zylinderkörper (10) zu fixieren, hat die Außenwandung des Klemmabschnitts (51) eine vergleichbare Profilierung, die in die Längsrillen (27) rutschsicher eingreift.

Zwischen der Längsrillung (58) und den drei Umlaufkerben (17) weist der Zylinderkörper (10) mehrere, auf dem Umfang verteilte, Querbohrungen (28) oder Ausnehmungen mit einem nicht kreisförmigen Querschnitt auf, über die der noch flüssige Klebstoff (8) beim Einschieben des Kolbenkörpers (50) in den Zylinderkörper (10) unter der oberen Deckplatte (101) verteilt wird.

Die Figur 6 zeigt den montierten Klebedübel. Der Kolbenkörper (50) ist vollständig in den Zylinderkörper (10) eingeschoben und dort mit einer entsprechenden Gegenkontur zumindest formschlüssig in der Rastkerbe (25) verrastet. Hierbei hat der Klemmabschnitt (51) den oberen Bereich des Zylinderkörpers (10) elastisch aufgeweitet, um die Längs- (58) und die Querrillungen (65) rutschsicher in der Wandung der Bohrung (105) zu verkeilen. Der ausgehärtete Klebstoff (9) ist im Bereich der Deckplatten (101) und (111) verteilt.

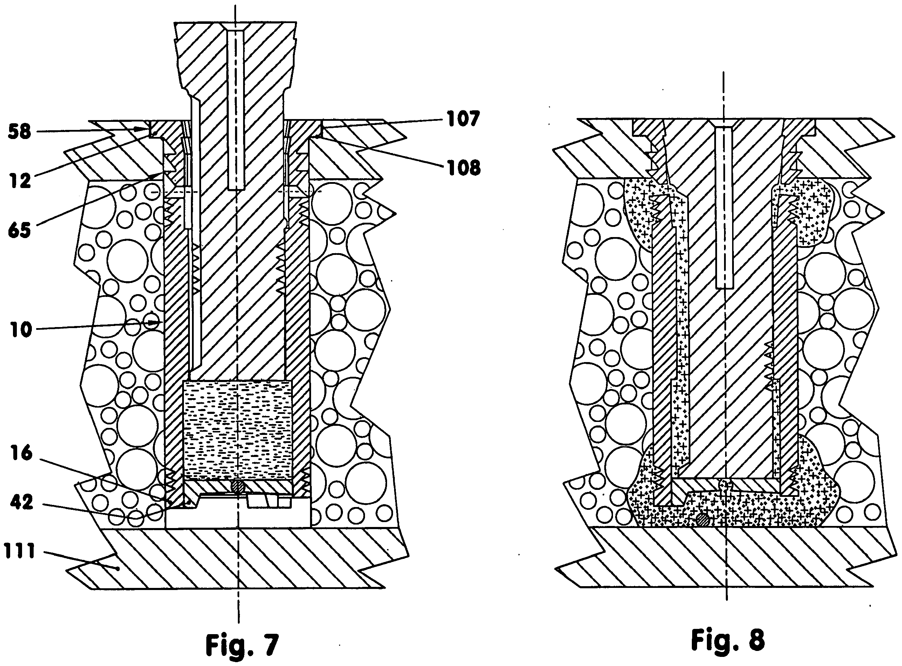

In den Figuren 7 und 8 ist der Gegenstand der Figuren 5 und 7 mit einem Auflageflansch (12) ausgestattet. Nur beispielhaft ist der Zylinderkörper (10) im Bereich der Längsrillung (58) flanschartig verbreitert. Sein Durchmesser ist z.B. ein bis zwei Millimeter größer als der maximale Durchmesser der Querrillung (65).

Gleichzeitig ist die Bohrung (105) als Stufenbohrung ausgeführt. Sie hat in der außen liegenden Oberfläche (101) eine zylindrische Stufensenkung (107) mit planer Grundfläche (108). Auf dieser Grundfläche (108) liegt der Auflageflansch (12) des Zylinderkörpers (10) nach dem Einsetzen des Klebedübels auf. Der untere Bereich des Zylinderkörpers (10) kontaktiert die untere Deckplatte (111) bei dieser Variante nicht.

Anstelle der zylindrischen Stufensenkung kann die Senkung auch die Form eines Kegelstumpfmantels, einer Kugelkalottenoberfläche oder dergleichen haben.

Das Eindrücken des Kolbenkörpers (50) in den Zylinderkörper (10) erfolgt wie schon zuvor beschrieben. Auch hier verkeilen sich die Strukturen (58, 65) des Zylinderkörpers (10) in der Bohrung (105, 107).

Die Figuren 10 bis 12 zeigen einen Klebedübel mit zwei gegenläufig bewegbaren Kolbenkörpern (50, 150). Der Zylinderkörper (10) des Klebedübels ist im Wesentlichen vergleichbar mit dem aus den Figuren 5 und 6. Nur der Verdrängungsbereich (36) ist in die Mitte verlegt und der Boden (41) fehlt. Zudem verfügt der untere Innenbereich über einen zweiten Verteilbereich (132).

Die Außenwandung des Zylinderkörpers (10) weist im oberen Bereich beispielsweise keine Strukturen auf. Auf der Höhe des Verdrängungsbereichs (36) ist die Außenwandung z.B. tailliert, um dort die Elastizität der Wandung (38) zu erhöhen, vgl. gestrichelt dargestellte Ausbeulung (39).

Der obere Kolbenkörper (50) ist eine Kurzversion des in Figur 7 gezeigten Kolbenkörpers. Der untere, umgekehrt eingebaute Kolbenkörper (150) hat keinen Klemmabschnitt. Ggf. ist er durch eine entsprechende Profilierung verdrehsicher im Zylinderkörper (10) längsgeführt. Beide Kolbenkörper (50, 150) stehen über Rastnoppen (76, 176) am Zylinderkörper (10) in den Verteilbereichen (32, 132) an.

Für die Montage wird der Klebedübel zunächst in die Bohrung (130) eingesetzt. Der untere Kolbenkörper (150) liegt auf der unteren Deckplatte (111) auf. Damit auch Klebstoff (8) zwischen den unteren Kolbenkörper (150) und die Deckplatte (111) fließen kann, weist die untere Stirnfläche (178) des Kolbenkörpers (150) z.B. drei Füße (179) auf.

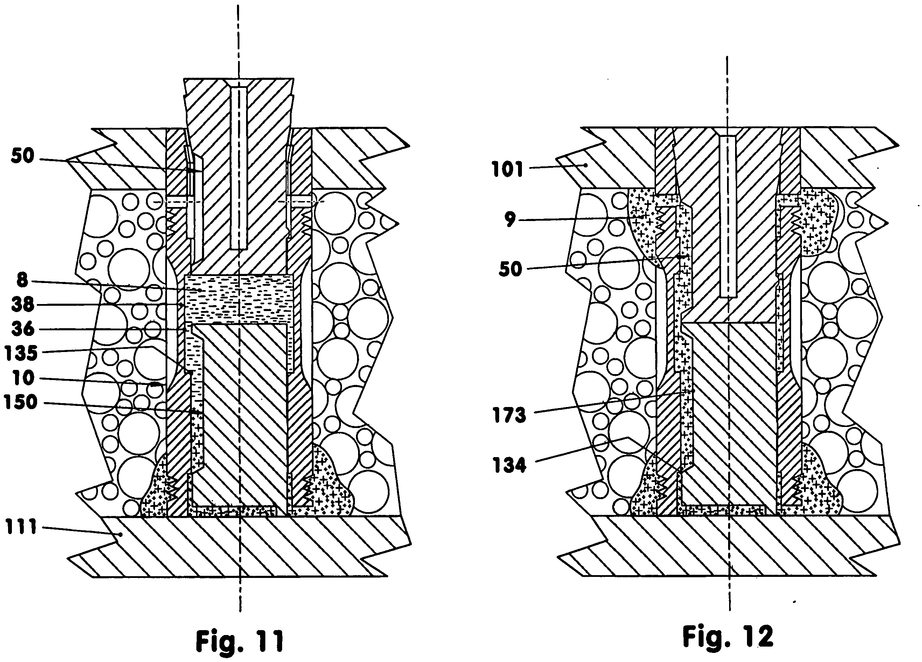

Um den noch flüssigen Klebstoff (8) zu verteilen, wird der Zylinderkörper (10) und der obere Kolbenkörper (50) gemeinsam nach unten in Richtung auf die untere Deckplatte (111) geschoben. Der Zylinderkörper (10) schiebt sich über den unteren Kolbenkörper (150). Durch die Druckerhöhung im Verdrängungsbereich (36) beult sich die Wandung (38) aus, vgl. die ausgebeulte Wandung (39). Die unteren Kanäle (173) gelangen hierbei über die obere Steuerkante (134). Der Klebstoff (8) strömt zur Deckplatte (111), vgl. Figur 11. Sobald der Zylinderkörper (10) an der unteren Deckplatte (111) anschlägt, verschließt eine untere Steuerkante (135) die unteren Kanäle (173).

Nun wird der obere Kolbenkörper (50) nach unten geschoben. Nach einem kurzen, elastischen Beulen der Wandung fördert der Kolbenkörper (50) nach dem Verdrängerprinzip den Klebstoff (8) in den Bereich der oberen Deckplatte (101), vgl. Figur 12. Der obere Kolbenkörper (50) verrastet im Zylinderkörper (10) in der oben genannten Weise. Einige Zeit später hat der Klebstoff (9) abgebunden.

Bei allen gezeigten Klebedübel besteht die Möglichkeit, den Zylinderkörper (10) zu verlängern und in eine in die untere Deckplatte (111) gebohrte Sacklochbohrung hineinragen zu lassen, vgl. DE 10 2006 049 954 A1.

Als unbetätigter Klebedübel wird der Dübel bezeichnet, wie er in den Handel gelangt, d.h. der abgedichtete Verdrängungsbereich (36) ist mit fließfähigem Klebstoff (8) befüllt und der Kolbenkörper (50) steht um seinem maximalen Einschiebhub aus dem Zylinderkörper (10) heraus.

### Bezugszeichenliste:

- 5: Mittellinie des Klebedübels
- 6: Dübelsetzrichtung
- 8: Klebstoff, flüssig
- 9: Klebstoff, fest

- 10: Zylinderkörper
- 11: Rohrabschnitt
- 12: Auflageflansch
- 14: Stirnfläche, oben
- 16: Füße
- 17: Kerben, umlaufend, oben, Umlaufkerben
- 18: Kerben, umlaufend, unten, Umlaufkerben

- 21: Endbereich, oben
- 22: Endbereich, unten
- 25: Rastkerbe
- 26: Kerbflanke, eben
- 27: Längsrillen
- 28: Querbohrungen, radial
- 29: Steuerkante, oben

- 31: Ausnehmung, Stufenbohrung
- 32: Verteilbereich
- 33: Zylinderbereich
- 34: Steuerkante, unten
- 35: Rastnoppen
- 36: Verdrängungsbereich
- 37: Austrittsquerschnitt
- 38: Wandung
- 39: Ausbeulung

- 41: Boden, Zylinderboden
- 42: Füße
- 43: Austrittsausnehmung
- 44: Querschnitt zu (43)
- 45: Verschlusselement, Kugel

- 50: Kolbenkörper
- 51: Klemmabschnitt
- 52: Stirnfläche
- 53: Hüllfläche
- 54: Kernzylinder
- 55: Ausnehmung, zylindrisch, zentral
- 56: Ausnehmung, kegelförmig

- 58: Längsrillung, Kerbverzahnung, Struktur
- 59: Zähne

- 65: Querrillung, Struktur
- 66: Stege
- 67: Gleitflanken
- 68: Sperrflanken

- 71: Kolbenabschnitt
- 72: Kolbenbodenfläche
- 73: Kanäle, Längsnuten
- 74: Kanalenden, unten
- 75.: Kanalenden, oben
- 76: Rastnoppen
- 77: Querrillen

- 80: Befestigungsmittel, Spanplattenschraube
- 81: Schraubenkopf, Kopf
- 82: Schaft

- 90: Möbelbeschlag
- 91: Bohrung

- 100: Sandwichplatte, Leichtkern-Verbundplatte; flächiges Bauteil in Stützkernbauweise
- 101: Deckplatte, oben
- 102: außen liegende Oberfläche
- 103: innen liegende Oberfläche
- 105: Bohrung
- 107: Stufensenkung, zylindrisch
- 108: Grundfläche der Stufensenkung, plan

- 111: Deckplatte, unten
- 113: innen liegende Oberfläche

- 121: Stützkern, Wabenkern, Schaumstoffkern
- 125: Bohrung

- 130: Gesamtbohrung, Ausnehmung

- 132: Verteilbereich
- 134: Steuerkante, oben
- 135: Steuerkante, unten

- 150: Kolbenkörper, unten

- 173: Kanäle, Längsnuten
- 174: Kanalenden, unten
- 176: Rastnoppen
- 178: Stirnfläche
- 179: Füße

## Patentansprüche

1. Klebedübel zur Verwendung in Leichtbauplatten (100) aus mindestens einem Zylinderkörper (10) und mindestens einem Kolbenkörper (50, 150),
**dadurch gekennzeichnet,**
- **dass** der einzelne Zylinderkörper (10) zusammen mit mindestens einem Kolbenkörper (50, 150) einen Verdrängungsbereich (36) dicht umschließt,
- **dass** der Verdrängungsbereich (36) mit einem fließfähigen Klebstoff (8) befüllt ist und
- **dass** der Zylinderkörper (10) an seinem unteren (22) und/oder seinem oberen Endbereich (21) mindestens eine Austrittsausnehmung (43) oder eine Steuerkante (34, 134) hat, die druckgesteuert einen Klebstoffaustrittsquerschnitt (37, 44) freigibt.

2. Klebedübel gemäß Anspruch 1, **dadurch gekennzeichnet, dass** der Kolbenkörper (50, 150) eine zentrale Ausnehmung (55, 56) zur Aufnahme eines Befestigungsmittels (80) aufweist.

3. Klebedübel gemäß Anspruch 1, **dadurch gekennzeichnet, dass** der Kolbenkörper (50, 150) im Zylinderkörper (10) - bei unbetätigtem Klemmdübel - verrastet ist.

4. Klebedübel gemäß Anspruch 1, **dadurch gekennzeichnet, dass** mindestens ein Kolbenkörper (50, 150) mindestens einen Kanal (73, 173) aufweist, der - in Kolbenbewegungsrichtung gesehen - kurz hinter der Kolbenbodenfläche (72) beginnt und bei zusammengeschobenem Klebedübel im jeweils hinteren Endbereich (21, 22) des Zylinderkörpers (10) endet.

5. Klebedübel gemäß Anspruch 1, **dadurch gekennzeichnet, dass** der Zylinderkörper (10) einen Zylinderboden (41) aufweist, der eine Austrittsausnehmung (43) hat, die bei unbetätigtem Klebedübel durch ein Verschlusselement (45) dicht verschlossen ist.

6. Klebedübel gemäß Anspruch 5, **dadurch gekennzeichnet, dass** das Verschlusselement (45) eine in die Austrittsausnehmung (43) dicht eingeklemmte Kugel ist.

7. Klebedübel gemäß Anspruch 1, **dadurch gekennzeichnet, dass** der Kolbenkörper (50) zur Aufnahme eines Befestigungsmittels (80) dient.

8. Klebedübel gemäß Anspruch 7, **dadurch gekennzeichnet, dass** der Kolbenkörper (50) eine zentrale Ausnehmung (55, 56) aufweist, deren mittlerer Durchmesser mindestens um 30% kleiner ist als der Kern- oder Minimaldurchmesser des darin zu befestigenden Befestigungsmittels (80).

9. Klebedübel gemäß Anspruch 1, **dadurch gekennzeichnet, dass** der Zylinderkörper (10) einen Zylinderbereich (33) und einen Verdrängungsbereich (36) aufweist, wobei der Innendurchmesser des Verdrängungsbereichs (36) größer ist als der des Zylinderbereichs (33) und wobei der Kolbenkörper (50) bei unbetätigtem Klebedübel dicht im Zylinderbereich (33) sitzt.

10. Klebedübel gemäß Anspruch 9, **dadurch gekennzeichnet, dass** mindestens ein Kolbenkörper (50, 150) klebstoffführende Kanäle (73, 173) aufweist, deren kolbenbodennahe Enden (74, 174) mehrere Zehntel Millimeter von der Kolbenbodenfläche (72) des Kolbenkörpers (50, 150) entfernt sind.

## Claims

1. A chemical (adhesive) anchor stud for use in light-weight building boards (100), comprising at least one cylinder body (10) and at least one piston body (50, 150), **characterized in that**
- the single cylinder body (10) and at least one piston body (50, 150) jointly surround a displacement region (36) in a sealing relationship;
- displacement region (36) is filled with a flowable adhesive composition (8); and
- cylinder body (10) has at its lower (22) and/or upper end portion (21) at least one outlet opening (43) or a control edge (34, 134) adapted to uncover an adhesive egress cross-section (37, 44) under pressure control.

2. Chemical (adhesive) anchor stud as claimed in claim 1, **characterized in that** piston body (50, 150) has a central opening (55, 56) for the reception of a fastening means (80).

3. Chemical (adhesive) anchor stud as claimed in claim 1, **characterized in that** piston body (50, 150) is retained in place in cylinder body (10) by detent means in the non-actuated condition of the anchor.

4. Chemical (adhesive) anchor stud as claimed in claim 1, characterized that at least one piston body (50, 150) has therein at least one channel (73, 173) which begins short of piston bottom (72), seen in the direction of piston movement, and ends in the rear end region (21, 22) of cylinder body (10) in the pushed-together condition of the anchor stud.

5. Chemical (adhesive) anchor stud as claimed in claim 1, **characterized in that** cylinder body (10) has a cylinder bottom (41) having therethrough an outlet opening (43) sealed by a sealing element (45) in the non-activated condition of the anchor stud.

6. Chemical (adhesive) anchor stud as claimed in claim 5, **characterized in that** sealing element (45) is a ball sealingly clamped in place in outlet opening (43).

7. Chemical (adhesive) anchor as claimed in claim 1, **characterized in that** piston body (50) serves to receive a fastening means (80).

8. Chemical (adhesive) anchor stud as claimed in claim 7, **characterized in that** piston body (50) has a central opening (55, 56) of which the mean diameter is least 30 % smaller than the core or minimum diameter of the fastening means (80) to be secured therein.

9. Chemical (adhesive) anchor stud as claimed in claim 1, **characterized in that** cylinder body (10) has a cylinder portion (33) and a displacement portion (36), with the inner diameter of displacement portion (36) greater than the inner diameter of cylinder portion (33), and with piston body (50) sealingly seated in cylinder portion (33) in the non-actuated condition of the anchor stud.

10. Chemical (adhesive) anchor stud as claimed in claim 9, **characterized in that** at least one piston body (50, 150) has therein adhesive-conducting channels (73, 173), with the distance between the ends (74, 174) thereof adjacent the piston bottom and piston bottom (72) of piston body (50, 150) amounting to several tenths of a millimeter.

## Revendications

1. Cheville adhésive destinée à être utilisée dans des plaques de construction légère (100), composée au moins d'un corps de cylindre (10) et au moins d'un corps de piston (50, 150),
**caractérisé en ce**
- **que** chaque corps de cylindre (10) avec au moins un corps de piston (50, 150) entoure étroitement une zone de refoulement (36)
- **que** la zone de refoulement (36) est remplie d'une substance adhésive (8) capable de couler et
- **que** le corps de cylindre (10), dans sa partie d'extrémité inférieure (22) et/ou dans sa partie d'extrémité supérieure (21), présente un orifice de sortie (43) ou une arête de commande (34, 134) qui, par une commande de pression, libère une section transversale de sortie d'une substance adhésive (37, 44).

2. Cheville adhésive selon la revendication 1, **caractérisée en ce que** le corps de piston (50, 150) présente une cavité centrale (55, 56) destinée à recevoir un moyen de fixation (80).

3. Cheville adhésive selon la revendication 1, **caractérisée en ce que** le corps de piston (50, 150), lorsque la cheville adhésive n'est pas activée, est encliqueté dans le corps de cylindre (10).

4. Cheville adhésive selon la revendication 1, **caractérisée en ce qu'**au moins un corps de piston (50, 150) présente au moins un canal (73, 173) qui, dans la direction de mouvement du piston, commence à faible distance derrière la surface du fond de piston (72) et qui, lorsque la cheville adhésive est comprimée, se termine dans la zone d'extrémité arrière (21, 22) du corps de cylindre (10).

5. Cheville adhésive selon la revendication 1, **caractérisée en ce que** le corps de cylindre (10) présente un fond de cylindre (41) avec un orifice de sortie (43) qui est fermé hermétiquement par un élément d'obturation (45), lorsque la cheville adhésive n'est pas activée.

6. Cheville adhésive selon la revendication 5, **caractérisée en ce que** l'élément d'obturation (45) est une bille coincée de manière étanche dans l'orifice de sortie (43).

7. Cheville adhésive selon la revendication 1, **caractérisée en ce que** le corps de piston (50) sert à recevoir un moyen de fixation (80).

8. Cheville adhésive selon la revendication 7, **caractérisée en ce que** le corps de piston (50) présente une cavité centrale (55, 56) dont le diamètre moyen est inférieur au moins de 30% au diamètre du noyau ou au diamètre minimal du moyen de fixation (80) à fixer dans la cavité.

9. Cheville adhésive selon la revendication 1, **caractérisée en ce que** le corps de cylindre (10) présente une partie de cylindre (33) et une zone de refoulement (36), le diamètre intérieur de la zone de refoulement (36) étant plus grand que celui de la partie de cylindre (33) et le corps de piston (50) étant logé de manière étanche dans la partie de cylindre (33), lorsque la cheville adhésive n'est pas activée.

10. Cheville adhésive selon la revendication 9, **caractérisée en ce qu'**au moins un corps de piston (50, 150) présente des canaux (73, 173) remplis de substance adhésive dont les extrémités proches du fond se trouvent à plusieurs dizaines de millimètres de la surface du fond de piston (72) du corps de piston (50, 150).
